# EUROPÄISCHE PATENTSCHRIFT

(11) **EP 1 358 464 B1**
(45) Veröffentlichungstag und Bekanntmachung des Hinweises auf die Patenterteilung: **28.07.2004**
(21) Anmeldenummer: 02708197.5
(22) Anmeldetag: 30.01.2002
(51) Int. Cl.: G01N 1/40, G01N 1/22, G01N 15/06, C01B 31/00, F27D 3/08, G01N 1/04

(54) **Verfahren zur Erzeugung von Proben aus Filter- oder Flugasche**
Method for producing sample from filter or fly ash
Procédé pour la production d'échantillons de cendre de filtres ou de cendre volante

(30) Priorität: 05.02.2001 DE 10105117
(43) Veröffentlichungstag der Anmeldung: 05.11.2003
(73) Patentinhaber: Promecon Prozess- Und Messtechnik Conrads GmbH, 39179 Barleben (DE)
(72) Erfinder: CONRADS, Hans, Georg, 30177 Hanover (DE); KLUPSCH, Volkhard, 39179 Barleben (DE); HÖPFL, Thomas, 06114 Halle (DE)
(74) Vertreter: Heyner, Klaus, Dr.-Ing.
(86) Internationale Anmeldenummer: PCT/DE2002/000381
(87) Internationale Veröffentlichungsnummer: WO 2002/063276

(56) Entgegenhaltungen:
- DE-A- 3 303 177
- DE-A- 3 311 829
- DE-A- 19 531 393
- US-A- 3 718 819

## Beschreibung

Die Erfindung betrifft ein Verfahren zur Erzeugung von Proben aus Filter- oder Flugasche für die Bestimmung des Restkohlenstoffgehaltes durch die Bestimmung der Änderung elektrischer Parameter eines komplexen elektrischen Bauelementes, das die erzeugten zu untersuchenden Proben aus Filter- oder Flugasche beinhaltet.

Die Erfindung ist insbesondere für den Einsatz in Aschesammelstationen von Feuerungsanlagen in Kohlekraftwerken vorgesehen. Sie kann aber darüber hinaus mit Vorteil auch überall dort eingesetzt werden, wo der Restkohlenstoffgehalt von Filter- oder Rugasche durch die Bestimmung der Änderung elektrischer Parameter komplexer elektrischer Bauelemente, die die zu untersuchende Filter- oder Flugasche beinhalten, bestimmt werden soll. Dies können neben Kraftwerksfeuerungsanlagen beispielsweise auch Müllverbrennungsanlagen oder Anlagen zur Zementherstellung sein.

Die Bestimmung des Restkohlenstoffgehaltes von Filter- oder Flugasche ist zum einen unter dem Gesichtspunkt der Führung und Optimierung des Verbrennungsprozesses, das heißt, für eine möglichst vollständige Nutzung der im Brennstoff enthaltenen Energie notwendig, zum anderen aber auch zur Qualitätskontrolle der Filter- oder Flugasche, für deren Verwendung als Zuschlagstoff für die Baustoff- und Zementindustrie. Zielstellung ist unter beiden Gesichtspunkten ein möglichst geringer Restkohlenstoffgehalt bzw. ein möglichst kleiner Anteil unverbrannter Bestandteile. Wechselnde Lastbedingungen in einer Feuerungsanlage und unterschiedliche Brennstoffzusammensetzungen erfordern eine kontinuierliche Überwachung des Verbrennungsprozesses, was eine möglichst kontinuierliche oder in kurzen Zeitabständen periodische und zeitlich nicht oder nur gering verzögerte Bestimmung des Restkohlenstoffgehaftes in den Verbrennungsrückständen erforderlich macht.

Die derzeit überwiegend in Kraftwerksfeuerungsanlagen von Kohlekraftwerken noch anzutreffende Methode der Entnahme von Ascheproben und anschließender analytischer Untersuchung der Proben im Labor ist zum einen sehr kostenaufwendig und führt zum anderen auch zu einem so erheblichen Zeitversatz, dass eine optimierte Führung des Verbrennungsprozesses praktisch nicht möglich ist.

Es werden daher schon seit längerem Anstrengungen unternommen, um Verfahren und Einrichtungen zu entwickeln, die eine Bestimmung des Restkohlenstoffgehaltes auf einfache Weise und kontinuierlich oder periodisch ohne Zeitversatz ermöglichen. Dabei haben sich Verfahren, die auf einer Änderung elektrischer Parameter komplexer elektrischer Bauelemente, die die zu untersuchende Filter- oder Flugasche beinhalten, basieren als besonders geeignet erwiesen. Problematisch ist aber die Handhabung der ein extrem schwieriges Schüttverhalten aufweisenden Filter- oder Flugasche.

In der DE 33 03 177 A1 werden ein Verfahren und eine Einrichtung zur Messung des Kohlenstoffgehaltes von Flugasche beschrieben, bei dem die Veränderung der Kapazitat eines Kondensators, in den eine Flugascheprobe als Dielektrikum eingebracht wird, ausgewertet wird. Mittels einer Förderschnecke wird dabei Flugasche aus einem Silo entnommen, in eine das Dielektrikum eines Kondensators bildende Messkammer überführt und mittels Vibrationen verdichtet. Danach wird die Kapazität der die verdichtete Flugascheprobe enthaltenden Messkammer bestimmt. Nach der Bestimmung der Kapazität wird die Flugascheprobe aus der Messkammer entfernt und mittels einer anderen Förderschnecke in das Silo zurückgeführt. Aus der elektrisch gemessenen Kapazität wird auf den Kohlenstoffgehalt der Flugasche geschlossen. Das Verfahren kann kontinuierlich oder periodisch durchgeführt werden, wobei zur Erzielung brauchbarer Messwerte sichergestellt werden muss, dass die in der Messkammer enthaltene Menge an Flugasche im Mittel im wesentlichen konstant ist und eine definierte Dichte aufweist. Aus der DE 33 11 829 A1 ist eine Anlage zur automatischen Kontrolle der Förderung eines staubförmigen Gutes mit Hilfe der kapazitiven Erfassung der dielektrischen Eigenschaften des staubförmigen Gutes bekannt, bei der aus unterschiedlichen Silos stammendes staubförmiges Gut (Filterasche) mittels eines Schneckenförderers einem Messkondensatorsystem zugeführt wird. Dem Schneckenförderer kommt dabei neben der Förderung der Filterasche die Aufgabe der Homogenisierung der aus unterschiedlichen Silos stammenden Filterasche zu, um repräsentative Messwerte bei der Bestimmung des Kohlenstoffgehaltes zu erreichen.

In der DE 198 56 870 A1 ist eine Lösung beschrieben bei der Asche, die in einem pneumatischen Fördersystem transportiert wird, einem Probennehmer zugeführt wird, wobei mittels Abluftfilter und Lichtschranke ein definierter Partikelgehalt der Probe realisiert wird, die Probe auf eine vorgegebene Analysetemperatur erwärmt und mittels einer Rütteleinrichtungverdichtet und dann einem Mikrowellenanalysator zugeführt wird. Die Bestimmung des Restkohlenstoffgehaltes in der dem Mikrowellenanalysator zugeführten aufbereiteten Probe erfolgt in bekannter Weise mittels Mikrowellenresonanztechnik Die untersuchte Probe wird dem pneumatischen Fördersystem wieder zugeführt.

Die beschriebenen Lösungen weisen einen hohen apparativen Aufwand für Entnahme, Aufbereitung und ggf Rückführung der Probe auf Dieser Aufwand ist letztlich dem extrem schlechten Schüttverhalten der zu untersuchenden Flugasche geschuldet. Es hat sich darüber hinaus gezeigt, dass die erreichte Genauigkeit der Restkohlenstoffbestimmung unbefriedigend ist. Insbesondere ist eine starke Streuung der Messwerte zu verzeichnen. Sie sind daher beispielsweise zur Regelung des Verbrennungsprozesses nur bedingt geeignet.

In der DE 42 24 128 A1 wird eine Lösung zur Bestimmung der Feuchte von tonhaltigem Material und dergl. formbaren Massen beschrieben, bei der mittels eines Schneckenförderers durch Strangpressen eine Verdichtung der Massen erfolgt, indem vorhandene Hohlräume beseitigt werden.

In der DD 251 623 A1 wird eine Lösung zur Glättung eines Gutstromes von rieselfähigem, pulverförmigem bis kömigem Gut beschrieben, wobei die Aufgabe besteht, Dichteunterschiede in diesem rieselfähigem Gutstrom zu glätten. Erfindungsgemäß wird dies in der beschriebenen Lösung dadurch erreicht, dass der Förderdruck des rieselfähigen Gutstromes in einem Schneckenförderer überwacht und als Steuergröße für die Drehzahl der Förderschnecke eingesetzt wird.

Auch mittels dieser Lösungen ist bei Filter- oder Flugasche keine, eine ausreichende Genauigkeit für die Regelung eines Verbrennungsprozesses aufweisende Bestimmung des Restkohlenstoffgehaltes möglich.

Ziel der Erfindung ist ein Verfahren zur Erzeugung von Filter- oder Flugascheproben für die Bestimmung des Restkohlenstoffgehaltes durch die Bestimmung der Veränderung der elektrischen Parameter eines komplexen elektrischen Bauelementes, das die zu untersuchenden Proben beinhaltet, welches ohne hohen apparativen Aufwand auskommt und eine hohe Genauigkeit der Bestimmung des Restkohlenstoffgehaltes ermöglicht.

Erfindungsgemäß wird dies durch ein Verfahren dem I. Patentanspruch gemäß erreicht. Verfahrensgemäß werden die Proben aus Filter- oder Flugasche für die Bestimmung der Veränderung elektrischer Größen eines die Proben aufnehmenden komplexen elektrischen Bauelementes mittels eines Schneckenförderers in das komplexe elektrische Bauelement gefördert und so weit verdichtet, bis ein sprunghafter Anstieg der Verdichtungskraft, bzw. des zur Förderung und Verdichtung notwendigen Drehmomentes des Schneckenförderers eintritt.

Es wurde gefunden, dass die bisher übliche Verdichtung der Filter- oder Flugasche durch Vibration nicht zu reproduzierbaren Verdichtungsergebnissen führt. Vielmehr verbleibt die Filter- oder Flugasche infolge der Vibrationen in einem fluidisierten Zustand. Außerdem führen die Vibrationen zu einer Entmischung unterschiedlicher Bestandteile der Filter- oder Flugasche. Sowohl die nicht reproduzierbaren Verdichtungsergebnisse insbesondere aber auch die Entmischungserscheinungen führen bei den bisher bekannten Einrichtungen und Verfahren zur Erzeugung von Filter- oder Flugascheproben für eine Bestimmung des Restkohlenstoffgehaltes nach der beschriebenen Methode zu erheblichen Streuungen der Messergebnisse. Die festgestellten Streuungen liegen deutlich oberhalb von ± 0,5 Prozent.

Grundlage des erfindungsgemäßen Verfahrens ist die gefundene Erkenntnis, dass bei der Verdichtung von Filter- oder Flugasche mit dem Erreichen eines bestimmten reproduzierbaren Verdichtungsgrades ein sprunghafter Anstieg der Verdichtungskraft um mehr als 200 Prozent zu verzeichnen ist, ohne dass eine weitere Erhohung des Verdichtungsgrades erreicht wird. Dadurch ist es möglich durch Auswertung dieses erheblichen und signifikanten Sprunges in der Verdichtungskraft auf einfache Weise reproduzierbare Verdichtungsverhältnisse zu schaffen, die dann mittels der beschriebenen Messmethode zu Messergebnissen hoher Genauigkeit und geringer Streuung führen.

Besonders vorteilhaft ist es, wenn das als geschlossene Messkammer ausgeführte komplexe elektrische Bauelementgemeinsam mit einem Schneckenförderer in einem die Filter- oder Flugasche aufnehmenden Behälter so angeordnet ist, dass der Schneckenförderer die Filter- oder Flugasche in die Messkammerfördert und bis zu einem Sprung des zur Förderung und Verdichtung aufgewandten Drehmomentes verdichtet. Durch die Anordnung des komplexen elektrischen Bauelementes im die Filter- oder Flugasche aufnehmenden Behälter wird erreicht, dass die Temperatur der Filter- oder Flugasche auf dem üblicherweise in Aschesammelbehältern herrschenden Niveau, d. h. zwischen 60 und 90 Grad Celsius gehalten wird. Damit sind, wie bei Lösungen des Standes der Technik üblich, keine zusätzlichen Maßnahmen zur Temperierung der Filter- oder Flugascheproben notwendig. Die Filter- oder Flugasche gelangt auf kurzem Wege direkt in die Messkammer und kann nach erfolgter Messung durch Umkehr der Drehrichtung der Förderschnecke des Schneckenförderers wieder in den Aschesammelbehälter zurückgeführt werden. Vorteilhaft kann es auch sein, wenn der Schneckenförderer eine nach oben hin offene Auffangrinne aufweist, mittels derer neu in den Behälter eingefüllte Filter- oder Flugasche aufgefangen werden kann. Eine derartige Auffangrinne sollte insbesondere dann vorgesehen werden, wenn der Schneckenförderer so innerhalb des Behälters angeordnet ist, dass er sich nicht ständig in einer Filteroder Flugascheschüttung befindet.

Selbstverständlich ist es auch möglich und sinnvoll an dem als Messkammer ausgeführten komplexen elektrischen Bauelement eine Einrichtung vorzusehen, die die Entnahme einer Filter- oder Flugascheprobe für externe, kalibrierende Untersuchungen ermöglicht.

Ein besonderer Vorteil des erfindungsgemäßen Verfahrens wird neben den erreichbaren genauen und wenig streuenden Messergebnissen in seiner Einfachheit gesehen. Es ist problemlos beherrschbar und kann bei einer Vielzahl von Messaufgaben zur Bestimmung des Restkohlenstoffgehaltes von Filter- oder Flugasche durch Bestimmung der Veränderung elektrischer Größen eines die Proben aufnehmenden komplexen elektrischen Bauelementes mit Vorteil Anwendung finden.

Das erfindungsgemäße Verfahren sollen nachfolgend anhand eines Ausführungsbeispieles näher erläutert werden. Die zugehörige Zeichnung zeigt einen Teilschnitt einer in der Seitenwand I eines Aschesammelbehäfters angeordneten zur Durchführung des Verfahrens verwendeten Einrichtung. Diese besteht aus einem Schneckenförderer 2 und einem als geschlossene Messkammer ausgeführten komplexen elektrischen Bauelement 3. Die Förderschnecke 4 des Schneckenförderers 2 läuft innerhalb eines Rohres 5, das stirnseitig sowie im oberen Bereich Öffnungen 6 für den Ein- bzw. Austritt der Filter- oder Flugasche aufweist. In der beschriebenen Ausführung besitzt der Schneckenförderer eine Länge von ca. 300 Millimetern und einen Durchmesser von ca. 40 Millimetern. Die oberen Öffnungen 6 sind als ca. 60 Millimeter lange und einen Kreisbogen von ca. 40 Grad öffnende Ausnehmungen im Rohr 5 ausgeführt. Die Förderschnecke 4 wird von einem außerhalb des Behälters angeordneten Elektromotor 7 angetrieben. Im inneren des Behälters an die Behälterwand angrenzend ist oberhalb des Schneckenförderers 2 das komplexe elektrische Bauelement 3 so angeordnet, dass von der Förderschnecke 4 erfaßte Flugasche in das komplexe elektrische Bauelement 3 gefördert werden kann.

Zur Probennahme befindet sich der Schneckenförderer 2 innerhalb einer Filter- oder Flugascheschüttung. Die Filter- oder Flugasche gelangt durch die oberen Öffnungen 6, ggf auch die stimseitige Öffnung 6 in den Schneckenförderer 2 und wird durch Rotation der Förderschnecke 4 in die geschlossene Messkammer des komplexen elektrischen Bauelementes 3 gefördert und zunehmend verdichtet. Steigt das vom Schneckenforderer 2 aufgenommene Drehmoment sprunghaft von ca. 0,1 Newtonmeter auf ca. 0,3 Newtonmeter, ist innerhalb der geschlossenen Messkammer des komplexen elektrischen Bauelementes 3 eine definierte Verdichtung der Filter- oder Flugasche erreicht, die eine hinreichend genaue Bestimmung des Restkohlenstoffgehaltes der Filter- oder Flugasche durch Bestimmung der Veränderung elektrischer Größen des komplexen elektrischen Bauelementes 3, in dem sich die verdichtete Filter- oder Flugasche befindet, ermöglicht. Die erreichte Streuung der Messwerte liegt beim beschriebenen Ausführungsbeispiel unterhalb von ± 0,2 Prozent.

Nach der Messung wird durch Drehrichtungsumkehr der Förderschnecke 4 das komplexe elektrische Bauelement 3 entleert und die Filter- oder Flugasche zurück in den Behälter gefördert.

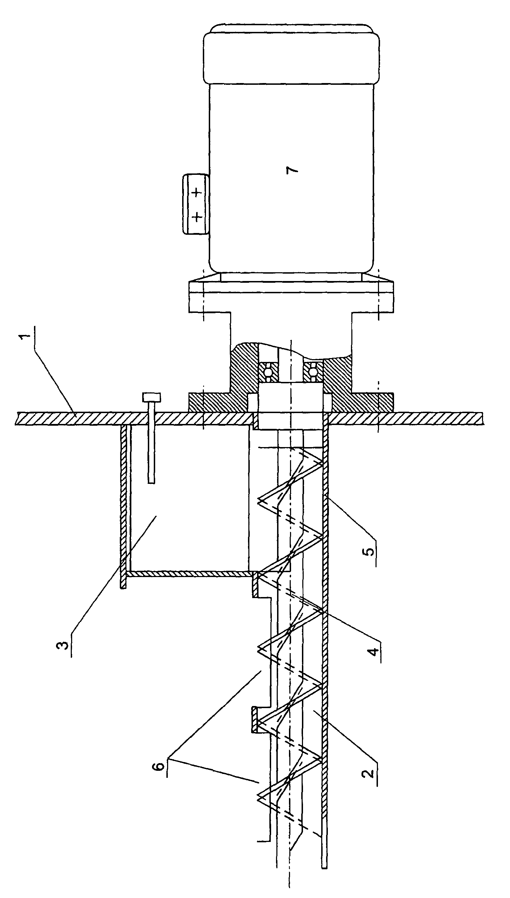

## Patentansprüche

1. Verfahren zur Erzeugung von Proben aus Filter- oder Flugasche für die Bestimmung des Restkohlenstoffgehaltes durch Bestimmung der Veränderung elektrischer Größen eines die Proben aufnehmenden komplexen elektrischen Bauelementes (3),
**dadurch gekennzeichnet,**
**dass** die Filter- oder Flugasche mittels eines Schneckenförderer (2) in das komplexe elektrische Bauelement (3) gefördert und so welt verdichtet wird, bis ein sprunghafter Anstieg des zur Förderung und Verdichtung notwendigen Drehmomentes eintritt.

2. Verfahren nach Anspruch 1
**dadurch gekennzeichnet,**
**dass** die Filter- oder Flugasche so weit verdichtet wird, bis ein sprunghafter Anstieg des zur Förderung und Verdichtung notwendigen Drehmomentes um 200 Prozent eintritt.

## Claims

1. Method for producing samples of filter or fly ash for the determination of the residual carbon content by measuring the change of electrical quantities of a complex electrical component (3) receiving the samples **characterized in that** the filter or fly ash is transported into the complex electrical component (3) by means of a screw conveyor (2) and is compacted to such an extent that there is a sudden rise in the torque required for transport and compaction.

2. Method to claim 1 **characterized in that** the filter or fly ash is compacted to such an extent that there is a sudden rise of 200 percent in the torque required for transport and compaction.

## Revendications

1. Procédé de production d'échantillons de cendre de filtres ou de cendre volante pour la détermination de la teneur résiduelle en carbone par détermination de grandeurs électriques d'un composant électrique complexe (3) contenant les échantillons,
**caractérisé par le fait**
**que** l'on transporte la cendre de filtres ou la cendre volante dans le composant électrique complexe (3) au moyen d'un convoyeur à vis (2) et qu'on la comprime jusqu'à apparition d'une brusque augmentation du couple nécessaire pour le transport et la compression.

2. Procédé selon la revendication 1,
**caractérisé par le fait**
**que** l'on comprime la cendre de filtres ou la cendre volante jusqu'à apparition d'une brusque augmentation de 200 pour cent du couple nécessaire pour le transport et la compression.
